(19)

Europäisches
Patentamt
European
Patent Office
Office européen
des brevets

(11)  **EP 4 549 382 A1**

(12)  ## EUROPEAN PATENT APPLICATION
published in accordance with Art. 153(4) EPC

(43)  Date of publication:
**07.05.2025  Bulletin 2025/19**

(21)  Application number: **23831385.2**

(22)  Date of filing: **26.06.2023**

(51)  International Patent Classification (IPC):
*C01B 32/00* (2017.01)    *H01M 4/36* (2006.01)
*H01M 4/587* (2010.01)

(52)  Cooperative Patent Classification (CPC):
**C01B 32/00; H01M 4/36; H01M 4/587;** Y02E 60/10

(86)  International application number:
**PCT/JP2023/023595**

(87)  International publication number:
**WO 2024/004945 (04.01.2024 Gazette 2024/01)**

(84)  Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30)  Priority: **29.06.2022   JP 2022104517**

(71)  Applicants:
• **JFE Chemical Corporation**
  **Tokyo 111-0051 (JP)**
• **JFE Steel Corporation**
  **Tokyo 100-0011 (JP)**

(72)  Inventors:
• **OKUMURA, Yusuke**
  **Tokyo 100-0011 (JP)**
• **SUTO, Mikito**
  **Tokyo 100-0011 (JP)**
• **KOBAYASHI, Hikaru**
  **Tokyo 100-0011 (JP)**
• **FUSHIWAKI, Yusuke**
  **Tokyo 100-0011 (JP)**
• **TAHARA, Tomoyuki**
  **Tokyo 111-0051 (JP)**
• **HAGA, Ryuta**
  **Tokyo 111-0051 (JP)**

(74)  Representative: **Grünecker Patent- und
Rechtsanwälte
PartG mbB
Leopoldstraße 4
80802 München (DE)**

(54)  **CARBON-COATED NON-GRAPHITIZABLE CARBON, LITHIUM ION SECONDARY BATTERY
NEGATIVE ELECTRODE, AND LITHIUM ION SECONDARY BATTERY**

(57)   An object of the present invention is to provide carbon-coated non-graphitizable carbon that can achieve both high discharge capacity and initial efficiency when used for a negative electrode for a lithium-ion secondary battery, a negative electrode for a lithium-ion secondary battery using the carbon-coated non-graphitizable carbon, and a lithium-ion secondary battery including the negative electrode for a lithium-ion secondary battery. The carbon-coated non-graphitizable carbon of the present invention is carbon-coated non-graphitizable carbon comprising: non-graphitizable carbon; and a carbon coating layer provided on a surface of the non-graphitizable carbon, wherein an average thickness of the carbon coating layer is 4 nm or more and 30 nm or less, and a minimum value of a thickness of the carbon coating layer is 70% or more of a maximum value of the carbon coating layer.

FIG. 1

EP 4 549 382 A1

**Description**

TECHNICAL FIELD

The present invention relates to carbon-coated non-graphitizable carbon, a negative electrode for a lithium-ion secondary battery, and a lithium-ion secondary battery.

BACKGROUND ART

These days, with increasing global awareness of global environmental protection, power generation using renewable energy is becoming widespread in order to reduce the use of fossil fuels and reduce $CO_2$ emissions. Since the output of renewable energy generated by solar power generation, wind power generation, or the like is likely to depend on the time zone, season, climate, etc., stabilization of power supply is attempted by using a power storage system (energy storage system, hereinafter also referred to as "ESS") for suppressing output fluctuation. The power storage system needs a large-scale storage battery; thus, a lithium-ion secondary battery (LIB), which has a high energy density per volume and mass and can be downsized, has attracted attention. At present, carbon materials are commonly used as negative electrode materials of the lithium-ion secondary battery. In addition to carbon, metals such as Si, Sn, Ti, and V or lithium salts of metal oxides, which have high energy density, hybrid materials of carbon and metal, and the like are supposedly in the research stage.

Among carbon materials, graphite-based materials generally have high capacity, and thus have been widely used for mobile electronic devices and the like; however, for ESS use, non-graphitizable carbon materials having high charge/discharge capacity and cycle characteristics are suitable. In particular, unlike hybrid vehicle batteries or the like, ESS use strongly requires a charge capacity that enables large-capacity charge at a low charge rate and life characteristics that allow long-term repeated charge and discharge.

A non-graphitizable carbon material as a negative electrode material of the lithium-ion secondary battery has features of being composed of non-oriented graphene layer units, having smaller crystallite sizes than graphite material, and having pores between graphene layer units. From these structural features, the non-graphitizable carbon material can occlude Li not only between layers but also in pores, and thus it is known that the non-graphitizable carbon material has a discharge capacity higher than the theoretical capacity of graphite, 372 mAh/g. Further, since the graphene layer units have small crystallite sizes and are not oriented, the non-graphitizable carbon material experiences a smaller volume change upon extraction or insertion of Li and has excellent life characteristics than graphite material. However, the non-graphitizable carbon material has a large number of reactive graphene edges due to the small sizes of crystallites, and reacts with the electrolytic solution to form an SEI (solid electrolyte interphase) coating; hence, the non-graphitizable carbon material has a problem that the initial efficiency represented by the percentage of the discharge capacity to the initial charge capacity is low.

As a method for improving the initial efficiency, a technique of coating a surface of a carbon material is known, and Patent Literature 1 discloses a nonaqueous electrolyte secondary battery using, for a negative electrode, a carbon material having a structure in which a surface of a substrate carbon material is coated with a coating carbon material, in which the (002) plane of the coating carbon material according to a wide angle X-ray diffraction method is oriented parallel to the surface of the substrate carbon material and the degree of orientation of the coating carbon material is 70% or more. Patent Literature 1 also discloses that the thickness of the surface carbon layer is preferably 10 to 1000 Å (angstrom).

CITATION LIST

PATENT LITERATURE

Patent Literature 1: JP H10-233206 A

SUMMARY OF INVENTION

TECHNICAL PROBLEMS

However, the degree of orientation of the carbon material of Patent Literature 1 was determined by image analysis from an area of 20 nm from the surface, and did not take account of the distribution of orientation in the thickness direction. Further, the distribution of thickness of the coating carbon material was not taken into account, either. When the present inventors used the carbon material of Patent Literature 1 for a negative electrode for a lithium-ion secondary battery, it was revealed that sufficient discharge capacity and initial efficiency are not obtained depending on charge/-discharge conditions.

The present invention has been made in view of the above points, and an object of the present invention is to provide carbon-coated non-graphitizable carbon that can achieve both high discharge capacity and initial efficiency when used for a negative electrode for a lithium-ion secondary battery, a negative electrode for a lithium-ion secondary battery using the carbon-coated non-graphitizable carbon, and a lithium-ion secondary battery including the negative electrode for a lithium-ion secondary battery.

SOLUTION TO PROBLEMS

The present inventors conducted studies on a structure capable of achieving both the discharge capacity and the initial efficiency. As a result, it has been revealed that, in the carbon-coated non-graphitizable carbon, when the carbon coating layer has a predetermined average thickness and has a uniform thickness, both high discharge capacity and initial efficiency can be achieved.

That is, the present inventors have found that the above problem can be solved by the following configuration.

(1) Carbon-coated non-graphitizable carbon comprising:

non-graphitizable carbon; and a carbon coating layer provided on a surface of the non-graphitizable carbon, wherein an average thickness of the carbon coating layer is 4 nm or more and 30 nm or less, and a minimum value of a thickness of the carbon coating layer is 70% or more of a maximum value of the carbon coating layer.

(2) The carbon-coated non-graphitizable carbon according to (1),

wherein in diffraction intensity of the carbon coating layer determined by a selected area electron diffraction method,
a peak intensity Ix corresponding to a 002 plane of graphite in a tangential direction of the carbon coating layer and a peak intensity Iy corresponding to a 002 plane of graphite in a normal direction of the carbon coating layer satisfy Formula (1) below:

$$Ix/Iy < 1.00 \quad (1).$$

(3) The carbon-coated non-graphitizable carbon according to (1) or (2),

wherein in a diffraction spectrum of the carbon coating layer measured by a selected area electron diffraction method,
an interlayer distance d002 of a 002 plane determined from a peak corresponding to a 002 plane of graphite in a normal direction of the carbon coating layer is 0.38 nm or more.

(4) The carbon-coated non-graphitizable carbon according to any one of (1) to (3), wherein Isp2/(Isp2 + Isp3) of the carbon coating layer measured by electron energy loss spectroscopy is 0.090 or more, where Isp2 is an intensity of a peak derived from sp2 and Isp3 is an intensity of a peak derived from sp3.

(5) Carbon-coated non-graphitizable carbon comprising:

non-graphitizable carbon; and a carbon coating layer provided on a surface of the non-graphitizable carbon, wherein an average thickness of the carbon coating layer is 4 nm or more and 30 nm or less,
a minimum value of a thickness of the carbon coating layer is 70% or more of a maximum value of the carbon coating layer,
in diffraction intensity of the carbon coating layer determined by a selected area electron diffraction method, a peak intensity Ix corresponding to a 002 plane of graphite in a tangential direction of the carbon coating layer and a peak intensity Iy corresponding to a 002 plane of graphite in a normal direction of the carbon coating layer satisfy Formula (1) below:

$$Ix/Iy < 1.00 \quad (1),$$

in a diffraction spectrum of the carbon coating layer measured by a selected area electron diffraction method, an interlayer distance d002 of a 002 plane determined from a peak corresponding to a 002 plane of graphite in a normal direction of the carbon coating layer is 0.38 nm or more, and
Isp2/(Isp2 + Isp3) of the carbon coating layer measured by electron energy loss spectroscopy is 0.090 or more, where Isp2 is an intensity of a peak derived from sp2 and Isp3 is an intensity of a peak derived from sp3.

(6) The carbon-coated non-graphitizable carbon according to any one of (1) to (5),

wherein in a diffraction spectrum of the non-graphitizable carbon measured by a selected area electron diffraction method,
there is no peak corresponding to a 002 plane of a graphite structure.

(7) Carbon-coated non-graphitizable carbon comprising:

non-graphitizable carbon; and a carbon coating layer provided on a surface of the non-graphitizable carbon,
wherein an average thickness of the carbon coating layer is 4 nm or more and 30 nm or less,
a minimum value of a thickness of the carbon coating layer is 70% or more of a maximum value of the carbon coating layer,
in diffraction intensity of the carbon coating layer determined by a selected area electron diffraction method, a peak intensity Ix corresponding to a 002 plane of graphite in a tangential direction of the carbon coating layer and a peak intensity Iy corresponding to a 002 plane of graphite in a normal direction of the carbon coating layer satisfy Formula (1) below:

$$Ix/Iy < 1.00 \quad (1),$$

in a diffraction spectrum of the carbon coating layer measured by a selected area electron diffraction method, an interlayer distance d002 of a 002 plane determined from a peak corresponding to a 002 plane of graphite in a normal direction of the carbon coating layer is 0.38 nm or more,
Isp2/(Isp2 + Isp3) of the carbon coating layer measured by electron energy loss spectroscopy is 0.090 or more, where Isp2 is an intensity of a peak derived from sp2 and Isp3 is an intensity of a peak derived from sp3, and
in a diffraction spectrum of the non-graphitizable carbon measured by a selected area electron diffraction method, no peak corresponding to a 002 plane of a graphite structure is observed.

(8) A negative electrode for a lithium-ion secondary battery, the negative electrode comprising the carbon-coated non-graphitizable carbon according to any one of (1) to (7).
(9) A lithium-ion secondary battery comprising the negative electrode for a lithium-ion secondary battery according to (8).

ADVANTAGEOUS EFFECTS OF INVENTION

As shown below, according to the present invention, it is possible to provide carbon-coated non-graphitizable carbon that can achieve both high discharge capacity and initial efficiency when used for a negative electrode for a lithium-ion secondary battery, a negative electrode for a lithium-ion secondary battery using the carbon-coated non-graphitizable carbon, and a lithium-ion secondary battery including the negative electrode for a lithium-ion secondary battery.

BRIEF DESCRIPTION OF DRAWINGS

[FIG. 1] FIG. 1 is a diagram showing an example of a peak corresponding to a 002 plane.
[FIG. 2] FIG. 2 is a cross-sectional view showing a coin-type secondary battery for evaluation.

DESCRIPTION OF EMBODIMENTS

Hereinbelow, carbon-coated non-graphitizable carbon, a negative electrode for a lithium-ion secondary battery, and a lithium-ion secondary battery of the present invention are described.
In the present specification, a numerical value range shown using "to" means a range that includes the numerical values written before and after "to" as a lower limit value and an upper limit value.
Further, each component may use one kind singly, or may use two or more kinds in combination. Here, when two or more kinds are used in combination for a component, the content amount of the component refers to the total content amount unless otherwise specified.

Further, the fact that high discharge capacity and high initial efficiency are exhibited in use for a negative electrode for a lithium-ion secondary battery may be referred to as simply "the effect of the present invention is excellent".

[1] Carbon-coated non-graphitizable carbon

Carbon-coated non-graphitizable carbon of the present invention is carbon-coated non-graphitizable carbon (a carbon material) (hereinafter, also referred to as simply a "carbon material of the present invention") including:

non-graphitizable carbon; and a carbon coating layer provided on a surface of the non-graphitizable carbon, in which the average thickness of the carbon coating layer is 4 nm or more and 30 nm or less, and the minimum value of the thickness of the carbon coating layer is 70% or more of the maximum value of the carbon coating layer.

Non-graphitizable carbon having an active surface, when used as a negative electrode of a Li-ion battery, would react with the electrolytic solution or Li during charge to form a reaction layer, and would have reduced efficiency. The carbon-coated non-graphitizable carbon of the present invention, by including the carbon coating layer, allows surface reactivity to be reduced to suppress the decomposition of a solvent, and has improved efficiency and storage durability. By uniform coating, efficiency can be improved without hindering the occlusion and release of Li.

Further, when charge and discharge are repeated, conductivity would not be successfully secured between particles of non-graphitizable carbon, and the number of particles not functioning as an active material would be increased; consequently, efficiency would be reduced. The carbon-coated non-graphitizable carbon of the present invention has improved conductivity of the surface by means of the carbon coating layer and prevents the breakage of the conductive path, and thus has improved efficiency.

[Non-graphitizable carbon]

The non-graphitizable carbon of the carbon material of the present invention is a kind of amorphous carbon, and is carbon that is difficult to graphitize even by heat treatment; and known types can be used as appropriate.

[Carbon coating layer]

The carbon coating layer of the carbon material of the present invention is a layer that coats the surface of the non-graphitizable carbon, and is mainly composed of carbon atoms. The carbon is amorphous carbon (hard carbon or soft carbon), graphite, a mixture of amorphous carbon and graphite, or the like.

[Thickness]

<Average thickness>

The average thickness of the carbon coating layer is 4 nm or more and 30 nm or less.

When the average thickness is less than 4 nm, an uncoated portion partially exists, and the effect of improving efficiency is not obtained; thus, the average thickness is set to 4 nm or more, and in terms of more excellent effect of the present invention, the average thickness is preferably 7 nm or more. When the average thickness is more than 30 nm, in use as a negative electrode of a Li-ion secondary battery, the occlusion and release of Li are hindered, and the effect of improving efficiency is not obtained. Thus, the average thickness is set to 30 nm or less, and in terms of more excellent effect of the present invention, the average thickness is preferably 20 nm or less and more preferably 15 nm or less.

The average thickness of the carbon coating layer can be determined by STEM (scanning transmission electron microscope) observation of a cross section of the particle.

A particle having an average particle size of the carbon-coated non-graphitizable carbon is selected, carbon vapor deposition or gold vapor deposition is performed on a flat portion of the particle, and the particle is processed into a thin piece of 140 nm or less at room temperature with a focused ion beam (FIB) so that a vertical cross section of the carbon coating layer can be observed. A vertical cross section of the carbon coating layer is observed by STEM, and a bright field (BF) image of any field of vision is used to measure the thickness of the carbon coating layer. The thicknesses of 5 places spaced apart by 50 nm or more are measured, and the average thickness is determined. Since the carbon coating layer is different in crystal orientation from the non-graphitizable carbon, the carbon coating layer can be distinguished from lattice fringes of the BF image, and the thickness can be measured. The distinction between the carbon coating layer and the non-graphitizable carbon may be determined also in auxiliary combination with a difference in contrast of an annular dark field (ADF) image or a difference in crystal orientation of an FFT (fast Fourier transform).

<Minimum value/maximum value>

The minimum value of the thickness of the carbon coating layer is 70% or more of the maximum value of the carbon coating layer. Hereinafter, the ratio of the minimum value of the carbon coating layer to the maximum value of the carbon coating layer is also referred to as "minimum value/maximum value". A larger minimum value/maximum value means that the uniformity in thickness of the carbon coating layer is higher. That is, in the carbon material of the present invention, the uniformity in thickness of the carbon coating layer is high.

In the carbon material of the present invention, by the carbon coating layer being uniformly provided, efficiency can be improved without hindering the occlusion and release of Li. When the minimum value/maximum value is less than 70%, the occlusion and release of Li are non-uniform, and efficiency is reduced. The upper limit is not particularly specified, but it is difficult to make control to 98% or more.

In terms of more excellent effect of the present invention, the minimum value/maximum value is preferably 75% or more, more preferably 80% or more, still more preferably 85% or more, and particularly preferably 90% or more.

The minimum value/maximum value can be determined by using STEM to observe a vertical cross section of the carbon coating layer produced by the above-described method and measuring the maximum value and the minimum value of the carbon coating layer in a 200-nm square area freely selected in a BF image of any visual field.

[Preferred aspects]

[Ix/Iy]

In the carbon material of the present invention, in terms of more excellent effect of the present invention, it is preferable that, in the diffraction intensity of the carbon coating layer obtained by the selected area electron diffraction method, a peak intensity Ix corresponding to the 002 plane of graphite in the tangential direction of the carbon coating layer and a peak intensity Iy corresponding to the 002 plane of graphite in the normal direction of the carbon coating layer satisfy the following formula.

$$Ix/Iy < 1.00 \quad (1)$$

When Ix/Iy is less than 1.00, the c-axis of carbon is oriented in the normal direction of the carbon coating layer, and in use as a battery, reactive graphene edges are less likely to come into contact with the electrolytic solution and the decomposition of the electrolytic solution is suppressed; thus, the initial efficiency can be improved more.

When Ix/Iy is 1.00 or more, the orientation of the c-axis is insufficient, and the effect of improving efficiency is small. The lower limit of Ix/Iy is not particularly specified, but it is difficult to set Ix/Iy to 0.10 or less.

Ix and Iy can be determined by the selected area electron diffraction method of the carbon coating layer. A vertical cross section of the carbon coating layer produced by the above-described method is observed by TEM, and a selected area electron diffraction pattern of the carbon coating layer is acquired in an area of a diameter of 100 nm around the carbon coating layer. From line profiles in the tangential direction of the carbon coating layer and the normal direction of the carbon coating layer of the resulting Debye rings, peak intensities of peaks corresponding to the 002 plane are taken as Ix and Iy, respectively. Since the carbon coating layer is different in crystal orientation from the non-graphitizable carbon, the carbon coating layer can be distinguished from a difference in contrast of the TEM image.

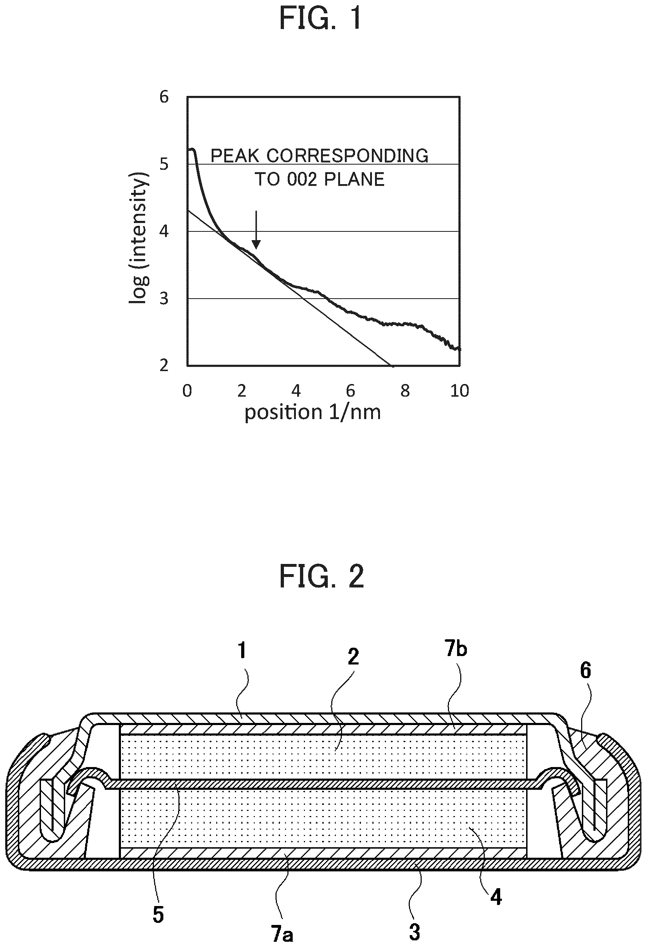

FIG. 1 shows an example of a peak corresponding to the 0002 plane. The horizontal axis represents the position from the center of the Debye ring in the reciprocal space, and the vertical axis represents the luminance (intensity) of the Debye ring. The reciprocal of the peak position of a peak corresponding to the 002 plane is the interlayer distance d002.

[Interlayer distance d002]

In the carbon material of the present invention, in terms of more excellent effect of the present invention, it is preferable that the interlayer distance d002 of the 002 plane determined from a peak corresponding to the 002 plane of graphite in the normal direction of the carbon coating layer in a diffraction spectrum of the carbon coating layer measured by the selected area electron diffraction method be 0.38 nm or more.

By setting d002 to 0.38 nm or more, the increase and decrease in the interlayer distance of the 002 plane upon occlusion and release of Li are alleviated, and the initial efficiency is improved more. When d002 is less than 0.38 nm, the interlayer distance of the 002 plane changes upon occlusion or release of Li, and the effect of improving efficiency is small. The upper limit of d002 is not specified, but it is difficult to set d002 to 0.45 nm or more.

d002 can be determined by the selected area electron diffraction method. It can be determined from the position of a peak corresponding to the 002 plane.

[Isp2/(Isp2 + Isp3)]

In the carbon material of the present invention, in terms of more excellent effect of the present invention, it is preferable that Isp2/(Isp2 + Isp3) of the carbon coating layer measured by electron energy loss spectroscopy be 0.090 or more. In carbon having a high Isp2/(Isp2 + Isp3), the c axis is oriented in the normal direction of the carbon coating layer, and in use as a battery, reactive graphene edges are less likely to come into contact with the electrolytic solution and the decomposition of the electrolytic solution is suppressed; thus, the initial efficiency can be improved more. If Isp2/(Isp2 + Isp3) is less than 0.090, the orientation is insufficient, and the effect of improving efficiency is small. The upper limit of Isp2/(Isp2 + Isp3) is not particularly specified, but it is difficult to make control to 0.130 or more.

Isp2/(Isp2 + Isp3) can be determined by electron energy loss spectroscopy. The above-described vertical cross section of the carbon coating layer is subjected to line analysis based on electron energy loss spectroscopy at a pitch of 0.5 nm in the normal direction of the carbon coating layer, and the intensity Isp2 of a peak derived from $sp^2$ around the loss energy of 286 eV and the intensity Isp3 of a peak derived from $sp^3$ around the loss energy of 397 eV are obtained. The highest Isp2/(Isp2 + Isp3) in the normal direction of the carbon coating is defined as Isp2/(Isp2 + Isp3) of the carbon coating layer.

[Peak corresponding to the 002 plane of the graphite structure of the non-graphitizable carbon]

In terms of more excellent effect of the present invention, in a diffraction spectrum of the substrate (non-graphitizable carbon) measured by the selected area electron diffraction method, the carbon material of the present invention preferably has no peak corresponding to the 002 plane of the graphite structure. When the graphite structure is undeveloped, the peak corresponding to the 002 plane is broad, and cannot be determined as a peak. When the graphite structure is undeveloped, the number of Li occlusion sites derived from pores is increased, and higher discharge capacity can be obtained.

The presence or absence of a peak corresponding to the 002 plane of the graphite structure is determined by the selected area electron diffraction method in STEM observation of a cross section of the particle. Specifically, the presence or absence of a peak corresponding to the 002 plane of the graphite structure is determined by the selected area electron diffraction method in an internal portion of the particle 50 nm or more deep from the interface between the non-graphitizable carbon and the carbon coating layer.

The method for controlling the peak corresponding to the 002 plane of the graphite structure is not particularly limited. For example, non-graphitizable carbon having no peak corresponding to the 002 plane of the graphite structure can be obtained by setting the firing temperature of the non-graphitizable carbon to 650°C or more and 850°C or less.

[Impurities of the carbon coating layer]

The carbon coating layer is preferably free of impurity elements. When the carbon coating layer contains an element such as H, N, O, P, or S or a metal element such as Si, Fe, Zn, Al, or Mg, when used as a battery, the carbon coating layer reacts with Li to form a compound, and has reduced initial efficiency. The content amount of impurities can be found by TEM-EDX (energy dispersive X-ray spectroscopy), and the amount of elements other than C is preferably not more than the detection limit.

[Average particle size]

The average particle size of the carbon material of the present invention is preferably 15 to 40 $\mu$m and more preferably 20 to 35 $\mu$m from the viewpoint of application for a thick-film electrode for obtaining large capacity.

The average particle size of the carbon material of the present invention is a particle size ($D_{50}$) at which the cumulative frequency in a laser diffraction particle size distribution meter is 50% in volume percentage.

[Specific surface area]

In the carbon material of the present invention, the specific surface area (BET) determined by a BET method based on adsorption of nitrogen gas varies depending on the particle size, and therefore cannot be described unconditionally; however, in terms of suppressing reactivity with the electrolytic solution, the specific surface area is preferably 10

m$^2$/g or less and more preferably 0.10 to 6.0 m$^2$/g.

[2] Method for producing the carbon-coated non-graphitizable carbon

The carbon-coated non-graphitizable carbon of the present invention (the carbon material of the present invention) can be obtained by, for example, the following production method. The production method for obtaining the carbon material of the present invention is not limited to the following.

[Production of the non-graphitizable carbon]

[Crosslinking treatment]

First, a source material of the non-graphitizable carbon (hereinafter, also referred to as simply a "source material") is subjected to crosslinking treatment to obtain a crosslinking-treated product.

Here, the source material is not particularly limited, and known source materials can be used; examples include some types of pitch such as coal-based pitch and petroleum-based pitch, resins such as phenol resin and furan resin, mixtures of pitch and resin, and the like, and among them, some types of pitch such as coal-based pitch and petroleum-based pitch are preferable from the viewpoint of economical efficiency, etc. In particular, by using coal-based pitch, the 002 plane spacing (interlayer distance d002) of the non-graphitizable carbon is likely to fall within the above range; thus, this is preferable.

Examples of the method for subjecting the above-described source material to crosslinking treatment include a method based on air blowing reaction, a dry method with oxidizing gas (air, oxygen, or ozone), a wet method with an aqueous solution of nitric acid, sulfuric acid, hypochlorous acid, a mixed acid, or the like, etc. Among them, a method based on air blowing reaction is preferable.

The air blowing reaction is a reaction in which the above-described source material is heated and an oxidizing gas (for example, air, oxygen, or ozone, or a mixture of them) is blown in to raise the softening point. By using the air blowing reaction, a crosslinking-treated product (for example, air blown pitch) having a high softening point of, for example, 200°C or more can be obtained.

The air blowing reaction is a reaction in a liquid phase state, and is known to hardly experience incorporation of oxygen atoms into the carbon material as compared to crosslinking treatment in a solid phase state.

In the air blowing reaction, a reaction mainly based on oxidative dehydration reaction proceeds, and polymerization proceeds by biphenyl-type crosslinking bonding. It is known that, by subsequent infusibility impartment and firing (described later), non-graphitizable carbon having a non-oriented three-dimensional structure in which such crosslinked portions are predominant and retaining a large number of voids for lithium to be occluded in is supposedly obtained.

The conditions for air blowing reaction are not particularly limited, but the reaction temperature is preferably 280 to 420°C and more preferably 320 to 380°C because excessively high temperatures cause a mesophase and low temperatures cause a low reaction rate. Further, the amount of oxidizing gas blown in is preferably 0.5 to 15 L (liters)/min and more preferably 1.0 to 10 L/min per 1000 g of pitch as compressed air. The reaction pressure may be any of normal pressure, reduced pressure, and increased pressure, and is not particularly limited.

The softening point of a crosslinking-treated product such as air blown pitch obtained by such crosslinking treatment is preferably 200 to 400°C and more preferably 250 to 350°C in terms of ease of infusibility impartment treatment.

The obtained crosslinking-treated product may be coarsely pulverized using an atomizer or the like before subjected to infusibility impartment treatment.

[Infusibility impartment treatment]

Next, the crosslinking-treated product such as air blown pitch is subjected to infusibility impartment treatment to obtain an infusibility impartment-treated product (for example, infusibility-imparted pitch). The infusibility impartment treatment is a kind of crosslinking treatment (oxidation treatment) performed in a solid phase state; thereby, oxygen is incorporated into the structure of the crosslinking-treated product, and by further proceeding of crosslinking, melting is hindered at high temperature.

The method of infusibility impartment treatment is not particularly limited; examples include a dry method with an oxidizing gas (air or oxygen), a wet method with an aqueous solution of nitric acid, sulfuric acid, hypochlorous acid, a mixed acid, or the like, and the like, and among them, a dry method with an oxidizing gas is preferable.

As the treatment temperature of infusibility impartment treatment, a temperature not more than the softening point of the crosslinking-treated product needs to be selected. Further, the rate of temperature increase in the case of performing the treatment in a batch system is preferably 5 to 100°C/hour and more preferably 10 to 50°C/hour from the viewpoint of preventing fusion bonding more.

Other treatment conditions in the infusibility impartment treatment are not particularly limited, but for example, the amount of oxidizing gas blown in is preferably 1.0 to 20 L/min and more preferably 2.0 to 10 L/min as compressed air per 1000 g. The reaction pressure may be any of normal pressure, reduced pressure, and increased pressure, and is not particularly limited.

The amount of oxygen in the infusibility impartment-treated product obtained by infusibility impartment treatment is preferably 3 to 20 mass% and more preferably 5 to 15 mass% in terms of preventing fusion bonding during firing.

[Pulverization treatment]

Next, the infusibility impartment-treated product such as infusibility-imparted pitch is subjected to pulverization treatment to adjust the particle size.

At this time, the average particle size of the infusibility impartment-treated product after pulverization treatment is preferably 15 to 40 $\mu$m and more preferably 20 to 35 $\mu$m. The average particle size referred to herein is a particle size ($D_{50}$) at which the cumulative frequency in a laser diffraction particle size distribution meter is 50% in volume percentage.

The pulverizer used for pulverization treatment is not particularly limited, and known methods can be used; examples include a jet mill, a pin mill, a ball mill, a hammer mill, a roller mill, a vibration mill, and the like.

In the case of using these pulverizers, the pulverization conditions are set such that the average particle size of the infusibility impartment-treated product after pulverization treatment falls within the above range.

[Firing]

Next, the infusibility impartment-treated product such as infusibility-imparted pitch subjected to pulverization treatment is fired under a reduced pressure or in an inert gas atmosphere such as nitrogen to obtain non-graphitizable carbon. The ultimate temperature (firing temperature) in firing is 600 to 1200°C, preferably 650 to 850°C. At this time, the rate of temperature increase is preferably 50 to 150°C/hour and more preferably 80 to 120°C/hour.

[Formation of the carbon coating layer]

The method for forming the carbon coating layer is not particularly limited, and examples include a method based on chemical vapor deposition (CVD). To form a carbon coating layer having a uniform thickness, high sp2 orientation, and a specific 002 plane spacing (interlayer distance d002), it is important that molecules of the source material uniformly reach the substrate and then be thermally decomposed to form a carbon coating layer, and the formation can be achieved by a technique according to the characteristics of diffusibility and thermal decomposability of molecules of the source material.

Methane and acetylene, which have low molecular weight and high diffusibility, can form a uniform carbon coating layer in an appropriate temperature range and an appropriate concentration range by a flow-type thermal CVD method. The preferred temperature varies depending on the type of the gas used; in the case of methane, the temperature range of the carbon substrate is preferably 800 to 1000°C, and when the temperature is less than 800°C, thermal decomposition is insufficient and it is difficult to form a carbon coating layer, and when the temperature is more than 1000°C, thermal decomposition is promoted in the gas phase and soot is generated, and consequently a non-uniform carbon coating layer is formed. The concentration range is preferably 10 to 80 vol%; when the concentration is less than 10 vol%, the supply of the source material is insufficient and it takes time to form a carbon coating layer, and when the concentration is more than 80 vol%, thermal decomposition may be promoted in the gas phase and soot may be generated, and consequently a non-uniform carbon coating layer may be formed. In the case of acetylene, the temperature range of the carbon substrate is preferably 600 to 800°C; when the temperature is less than 600°C, thermal decomposition is insufficient and it is difficult to form a carbon coating layer, and when the temperature is more than 800°C, thermal decomposition is promoted in the gas phase and soot is generated, and consequently a non-uniform carbon coating layer is formed. The concentration range is preferably 10 to 80 vol%; when the concentration is less than 10 vol%, the supply of the source material is insufficient and it takes time to form a carbon coating layer, and when the concentration is more than 80 vol%, thermal decomposition may be promoted in the gas phase and soot may be generated, and consequently a non-uniform carbon coating layer may be formed. Both the temperature of methane or acetylene to be introduced and the temperature of the inert gas for diluting these gases are preferably room temperature.

On the other hand, a source material having large molecular weight and low diffusibility can form a uniform carbon coating layer by CVI (chemical vapor infiltration), which is a kind of CVD (chemical vapor deposition). That is, the non-graphitizable carbon after firing is heated to 700 to 1100°C in a vacuum atmosphere, a carbon source is introduced into the furnace as a gas, holding is performed at a pressure of 1 to 30 kPa for 1 second to 30 seconds, and exhaustion is performed to remove the carbon source. After that, a carbon source is introduced again; this procedure is repeated a plurality of times, and thereby a carbon-coated non-graphitizable carbon material coated with thermally decomposable carbon can be obtained. The carbon source may be any material as long as it generates carbon by thermal decomposition; when the carbon source is liquid at room temperature, the carbon source is vaporized and introduced at a temperature not less than the boiling point. For example, benzene, hexane, toluene, cyclohexane, or the like can be used. The preferred temperature varies depending on the source material; in particular, cyclohexane is easily decomposed at low temperature and is likely to form thermally decomposable carbon, and can provide a uniform carbon coating layer having high orientation properties; thus, cyclohexane is preferably used as a carbon source. The carbon source that is liquid at room temperature is preheated in an atmosphere of 100 to 200°C, and is introduced into the furnace as a gas. When the temperature is less than 100°C, the carbon source is not instantaneously vaporized and thus the gas distribution in the furnace is made non-uniform, and consequently a non-uniform carbon coating layer is formed. When heating is performed to more than 200°C, depending on the type of the liquid carbon source, the carbon source may be decomposed before coating, and a non-uniform carbon coating may be formed. When the temperature is 100 to 200°C, thermally decomposable carbon capable of stably coating the non-graphitizable carbon can be introduced into the furnace. In the case where a carbon source that is liquid at room temperature is used, the supply into the furnace can be easily controlled and a large amount can be introduced as compared to a carbon source that is gas at room temperature; thus, this is preferable.

For a source material having large molecular weight and low diffusibility, particularly a carbon source that is liquid at room temperature, in the case of using a flow-type thermal CVD method instead of CVI, an inert gas such as $N_2$, Ar, or He cooled at 10°C or less is put into the carbon source liquid cooled at 10°C or less in a bubbling manner at a constant flow rate, and the resulting gas is introduced into the furnace. In the flow-type thermal CVD method, when the concentration of the carbon source contained in the introduced gas is increased, the carbon source is carbonized before coating and partially adheres to the non-graphitizable carbon, or the rate of coating growth is excessively increased and the film thickness is partially increased, and consequently a coating having a non-uniform film thickness is likely to be formed. By cooling the carbon source to be bubbled, the carbon concentration in the gas is made dilute, and a coating having a uniform film thickness can be stably formed. As the carbon source, for example, benzene, hexane, toluene, cyclohexane, or the like can be used. The preferred temperature varies depending on the source material; in particular, cyclohexane is easily decomposed at low temperature and is likely to form thermally decomposable carbon, and can provide a uniform carbon coating layer having high orientation properties; thus, cyclohexane is preferably used as a carbon source.

The heat treatment temperature (coating treatment temperature) is preferably 600°C or more and 1100°C or less although there is a restriction of the thermal decomposition temperature of the carbon source. When the heat treatment temperature is less than 600°C, the introduced carbon source may not be thermally decomposed, a thermally decomposable carbon coating may not be successfully obtained, and the initial efficiency may be reduced. When the heat treatment temperature is more than 1100°C, firing of the non-graphitizable carbon may proceed during heat treatment to change the structure, and a desired initial capacity may not be successfully obtained. The heat treatment temperature is preferably not more than the firing temperature of the non-graphitizable carbon so that the structure of the non-graphitizable carbon does not change.

[3] Lithium-ion secondary battery

Next, a lithium-ion secondary battery using the carbon-coated non-graphitizable carbon of the present invention (the carbon material of the present invention) as a negative electrode material (hereinafter, also referred to as a "lithium-ion secondary battery of the present invention") is described.

The lithium-ion secondary battery usually includes a negative electrode, a positive electrode, and a nonaqueous electrolytic solution as main battery components. The positive electrode and the negative electrode are each formed of a substance (as a layered compound), a compound, or a cluster capable of occluding lithium ions, and the entry and exit of lithium ions in charge/discharge processes are performed between layers. This is a battery mechanism in which lithium ions are doped into the negative electrode during charge and are dedoped from the negative electrode during discharge.

The lithium-ion secondary battery of the present invention is not particularly limited except that the carbon-coated non-graphitizable carbon of the present invention is used as a negative electrode material, and for other battery components, elements of common lithium-ion secondary batteries may be used correspondingly.

[Negative electrode]

The method for producing a negative electrode from the carbon-coated non-graphitizable carbon of the present invention is not particularly limited, and the production can be performed according to an ordinary production method. During the production of the negative electrode, a negative electrode mixture in which a binder is added to the carbon-coated non-graphitizable carbon of the present invention can be used. As the binder, a binder having chemical stability and electrochemical stability to the electrolyte is preferably used; and usually it is preferable to use the binder in an amount of about 1 to 20 mass% in the total amount of the negative electrode mixture. As the binder, polyvinylidene fluoride, carboxymethyl cellulose (CMC), styrene-butadiene rubber (SBR), or the like can be used. Further, a carbon material other than the carbon-coated non-graphitizable carbon of the present invention, or a graphite material may be added as an active material. Also carbon black, carbon fiber, or the like, for example, may be added as a conductive agent.

The carbon-coated non-graphitizable carbon of the present invention is mixed with a binder to prepare a paste-like negative electrode mixture coating material, and the negative electrode mixture coating material is usually applied to one surface or both surfaces of a current collector to form a negative electrode mixture layer. At this time, an ordinary solvent can be used for the preparation of the coating material. The shape of the current collector used for the negative electrode is not particularly limited, and examples include foil shapes, net shapes such as mesh and expanded metal, and the like. Examples of the current collector include copper, stainless steel, nickel, and the like.

[Positive electrode]

As the material of the positive electrode (positive electrode active material), a material that a sufficient amount of lithium ions can be doped into and dedoped from is preferably selected. Examples of such a positive electrode active material include transition metal oxides, transition metal chalcogenides, and vanadium oxides, and lithium-containing compounds of these, a Chevrel phase compound represented by the general formula $M_XMo_6S_{8-Y}$ (in the formula, X representing a numerical value in the range of $0 \leq X \leq 4$, Y representing a numerical value in the range of $0 \leq Y \leq 1$, and M representing a metal such as a transition metal), lithium iron phosphate, activated carbon, activated carbon fiber, and the like. For these, one kind may be used singly, or two or more kinds may be used in combination. Also a carbonate such as lithium carbonate may be added into the positive electrode, for example.

The lithium-containing transition metal oxide is a composite oxide of lithium and a transition metal, and may be a solid solution of lithium and two or more transition metals. Specifically, the lithium-containing transition metal oxide is represented by $LiM(1)_{1-P}M(2)_PO_2$ (in the formula, P representing a numerical value in the range of $0 \leq P \leq 1$, and M(1) and M(2) representing at least one transition metal element) or $LiM(1)_{2-Q}M(2)_QO_4$ (in the formula, Q representing a numerical value in the range of $0 \leq Q \leq 1$, and M(1) and M(2) representing at least one transition metal element). Here, examples of the transition metal element represented by M include Co, Ni, Mn, Cr, Ti, V, Fe, Zn, Al, In, Sn, and the like, and Co, Fe, Mn, Ti, Cr, V, and Al are preferable.

Such a lithium-containing transition metal oxide can be obtained by, for example, using oxides or salts of Li and a transition metal as starting materials, mixing these starting materials according to the composition, and performing firing in the temperature range of 600 to 1000°C in an oxygen atmosphere. The starting material is not limited to oxides or salts, and a lithium-containing transition metal oxide can be synthesized also from a hydroxide or the like.

Examples of the method for forming a positive electrode by using such a positive electrode material include a method in which a paste-like positive electrode mixture coating material composed of a positive electrode material, a binder, and a conductive agent is applied to one surface or both surfaces of a current collector to form a positive electrode mixture layer. As the binder, those given as examples for the negative electrode can be used. As the conductive agent, for example, a fine particulate carbon material, a fibrous carbon material, graphite, carbon black, or VGCF (vapor grown carbon fiber) can be used. The shape of the current collector is not particularly limited, and a current collector having a similar shape to the negative electrode is used. As a material of the current collector, aluminum, nickel, stainless steel foil, or the like can be usually used.

In forming the above-described negative electrode and positive electrode, various additives such as known conductive agents and binders can be used as appropriate.

[Electrolyte]

As the electrolyte, an ordinary nonaqueous electrolyte containing a lithium salt such as $LiPF_6$ or $LiBF_4$ as an electrolyte salt is used.

The nonaqueous electrolyte may be a liquid nonaqueous electrolytic solution, or may be a polymer electrolyte such as a solid electrolyte or a gel electrolyte.

In the case of a liquid nonaqueous electrolyte solution, an aprotic organic solvent such as ethylene carbonate, propylene carbonate, or dimethyl carbonate can be used as a nonaqueous solvent.

In the case of a polymer electrolyte, the polymer electrolyte contains a matrix polymer that is prepared in a gel form with a plasticizer (nonaqueous electrolytic solution). As the matrix polymer, an ether-based polymer such as polyethylene oxide or a crosslinked product thereof, a polymethacrylate-based polymer, a polyacrylate-based polymer, a fluorine-based polymer such as polyvinylidene fluoride or a vinylidene fluoride-hexafluoropropylene copolymer, or the like can be used singly or in mixture, and among them, a fluorine-based polymer is preferable from the viewpoint of oxidation-reduction stability, etc.

As an electrolyte salt and a nonaqueous solvent contained in the plasticizer (nonaqueous electrolytic solution) contained in the polymer electrolyte, those that can be used for a liquid electrolytic solution can be used.

In the lithium-ion secondary battery of the present invention, a separator such as a microporous body of polypropylene or polyethylene or a layer structure of such microporous bodies, or nonwoven fabric is usually used. Also a gel electrolyte can be used. In this case, for example, a negative electrode using the carbon-coated non-graphitizable carbon of the present invention (a negative electrode for a lithium-ion secondary battery of the present invention), a gel electrolyte, and a positive electrode are stacked in this order, and are housed in a battery exterior material.

The structure of the lithium-ion secondary battery of the present invention is arbitrary, and the shape and form thereof are not particularly limited and can be freely selected from, for example, a cylindrical type, a square type, and a coin type.

EXAMPLES

The present invention will now be specifically described by showing Examples. However, the present invention is not limited thereto.

[Example 1]

[Production of non-graphitizable carbon]

<Crosslinking treatment>

1000 g of coal-based QI (quinoline insolubles)-less pitch (QI: 0.1 to 0.5 mass%, the softening point: 82.5°C) was put into an autoclave equipped with an anchor type stirring apparatus, and heating was performed to 320°C in a nitrogen stream. After that, compressed air was blown into the pitch while being circulated at 2 L/min, and heating was performed at 320°C for 2 hours to perform crosslinking treatment by air blowing reaction. After that, cooling was performed to room temperature, and the contents (air blown pitch) were taken out.

<Infusibility impartment treatment>

Next, the taken-out air blown pitch was coarsely pulverized with an atomizer and was then put into a rotary furnace, the temperature was increased at 20°C/hour while compressed air was circulated at 2 L/min, and holding was performed at 250°C for 3 hours to perform infusibility impartment treatment; thus, infusibility-imparted pitch was obtained.

<Pulverization treatment>

The obtained infusibility-imparted pitch was subjected to pulverization treatment by using a jet mill (FS-4, manufactured by Seishin Enterprise Co., Ltd.) under such conditions that the average particle size of the pulverized product would be 29 μm.

<Firing>

100 g of the infusibility-imparted pitch subjected to pulverization treatment was put into a graphite lidded container, the temperature was increased to a firing temperature of 750°C at a rate of temperature increase of 100°C/hour in a nitrogen stream, and firing was performed at 750°C for 2 hours; thus, a carbon powder was obtained. The obtained carbon powder was a powder of non-graphitizable carbon.

[Formation of a carbon coating layer]

Next, the obtained carbon powder was put into a tubular furnace, and the temperature was increased to 750°C at a pressure of 1 kPa and a rate of temperature increase of 5°C/min. Then, in the state where the temperature was kept at 750°C (coating treatment temperature), toluene was preheated in an atmosphere of 200°C and was introduced into the tubular furnace. Then, holding was performed at a pressure of 10 kPa for 15 seconds, and then exhaustion was performed to a pressure of 1 kPa. The above operation was repeated 30 times, and thereby a carbon coating layer was formed on the surface of the non-graphitizable carbon. In this way, carbon-coated non-graphitizable carbon was obtained.

[Example 2]

Carbon-coated non-graphitizable carbon was obtained according to a similar procedure to Example 1 except that the pulverization treatment conditions were changed and the firing temperature and the coating treatment temperature were changed to 850°C.

[Example 3]

Carbon-coated non-graphitizable carbon was obtained according to a similar procedure to Example 1 except that the pulverization treatment conditions were changed, the firing temperature and the coating treatment temperature were changed to 700°C, and cyclohexane was used in place of toluene.

[Example 4]

A non-graphitizable carbon powder was obtained according to a similar procedure to the production of the non-graphitizable carbon of Example 1 except that the firing temperature was changed to 700°C.
Next, the obtained carbon powder was put into a tubular furnace, the temperature was increased to 700°C at a rate of temperature increase of 5°C/min with circulation of $N_2$ gas, and holding was performed at 700°C. Then, $N_2$ gas at 5°C was put into cyclohexane kept at 5°C in a bubbling manner, the $N_2$ gas containing cyclohexane was introduced into the furnace, and holding was performed for 60 minutes. After that, cooling was performed. In this way, a carbon coating layer was formed on the surface of the non-graphitizable carbon, and carbon-coated non-graphitizable carbon was obtained.

[Comparative Example 1]

A carbon powder was obtained according to a similar procedure to the production of the non-graphitizable carbon of Example 1 except that the pulverization treatment conditions were changed and the firing temperature was changed to 1100°C. In Comparative Example 1, the formation of a carbon coating layer was not performed.

[Comparative Example 2]

A carbon powder was obtained according to a similar procedure to the production of the non-graphitizable carbon of Example 1 except that the pulverization treatment conditions were changed and the firing temperature was changed to 850°C. In Comparative Example 2, the formation of a carbon coating layer was not performed.

[Comparative Example 3]

Carbon-coated non-graphitizable carbon was obtained according to a similar procedure to Example 1 except that the pulverization treatment conditions were changed and the firing temperature and the coating treatment temperature were changed to 700°C.

[Comparative Example 4]

First, a carbon powder was obtained according to a similar procedure to the production of the non-graphitizable carbon of Example 1 except that the pulverization treatment conditions were changed and the firing temperature was changed to 850°C. The obtained carbon powder was a powder of non-graphitizable carbon. Next, the obtained carbon powder was put into a tubular furnace, the temperature was increased to 850°C at a rate of temperature increase of 5°C/min with circulation of $N_2$ gas, and holding was performed at 850°C. Then, $N_2$ gas at 50°C was put into toluene kept at 50°C in a bubbling manner, the $N_2$ gas containing toluene was introduced into the furnace, and holding was performed for 60 minutes. After that, cooling was performed. In this way, a carbon coating layer was formed on the surface of the non-graphitizable carbon, and carbon-coated non-graphitizable carbon was obtained.

[Comparative Example 5]

A non-graphitizable carbon powder was obtained according to a similar procedure to the production of the non-graphitizable carbon of Example 1 except that the firing temperature was changed to 700°C.
Next, a carbon coating layer was formed on the surface of the non-graphitizable carbon by a similar procedure to Comparative Example 4 except that benzene was used in place of toluene as a carbon precursor (carbon source), the bubbling temperature was set to 15°C (the temperatures of both benzene and $N_2$ gas were set to 15°C), and the holding temperature was set to 800°C, and thus carbon-coated non-graphitizable carbon was obtained.

[Comparative Example 6]

A non-graphitizable carbon powder was obtained according to a similar procedure to the production of the non-graphitizable carbon of Example 1 except that the firing temperature was changed to 700°C.

Next, a carbon coating layer was formed on the surface of the non-graphitizable carbon by a similar procedure to Comparative Example 4 except that benzene was used in place of toluene as a carbon precursor (carbon source), the bubbling temperature was set to 15°C (the temperatures of both benzene and $N_2$ gas were set to 15°C), and the holding temperature was set to 1000°C, and thus carbon-coated non-graphitizable carbon was obtained.

[Evaluation]

[Evaluation of the carbon powder]

First, the carbon powder obtained in each of Examples 1 to 4 and Comparative Examples 1 to 6 was subjected to STEM observation and TEM observation of a cross section of the powder. The average thickness of the carbon coating layer, the maximum value and the minimum value of the thickness of the carbon coating layer, Ix/Iy of the carbon coating layer, the interlayer distance d002 of the carbon coating layer, Isp2/(Isp2 + Isp3) of the carbon coating layer, and the presence or absence of a peak corresponding to the 002 plane of the substrate (non-graphitizable carbon) were measured by the above-described methods. The results are shown in Tables 1 and 2 below. The STEM observation and the TEM observation were performed using JEM-ARM 200 F manufactured by JEOL Ltd. at an acceleration voltage of 200 kV.
The average particle size is a particle size ($D_{50}$) at which the cumulative frequency in a laser diffraction particle size distribution meter is 50% in volume percentage. The specific surface area was determined by a BET method based on adsorption of nitrogen gas.

[Evaluation of the battery]

Next, the carbon powder obtained in each of Examples 1 to 4 and Comparative Examples 1 to 6 was used as a negative electrode material to fabricate a coin-type secondary battery for evaluation (see FIG. 2), and various pieces of evaluation were performed.

<Preparation of a negative electrode mixture paste>

First, the obtained carbon powder was used as a negative electrode material to prepare a negative electrode mixture paste. Specifically, the carbon powder (95 parts by mass) and a 12% N-methylpyrrolidinone solution of polyvinylidene difluoride (5 parts by mass in terms of solid content) were put into a planetary mixer, stirring was performed at 100 rpm (round per minute) for 15 minutes, N-methylpyrrolidinone was further added to adjust the solid content ratio to 60%, and subsequently stirring was performed for 15 minutes; thus, a negative electrode mixture paste was prepared.

<Fabrication of a working electrode (negative electrode)>

The prepared negative electrode mixture paste was applied onto copper foil to have a uniform thickness, and the workpiece was put into a blower dryer to volatilize the solvent at 100°C; thus, a negative electrode mixture layer was formed. Next, the negative electrode mixture layer was pressed by roller pressing, and was punched into a circular shape having a diameter of 15.5 mm; thus, a working electrode (negative electrode) including a negative electrode mixture layer stuck to a current collector made of copper foil was fabricated. Before the evaluation, drying at 100°C for 8 hours or more in a vacuum was performed.

<Preparation of an electrolytic solution>

$LiPF_6$ was dissolved at a concentration of 1 mol/dm$^3$ in a mixed solvent obtained by mixing ethylene carbonate (33 vol%) and methyl ethyl carbonate (67 vol%), and thus a nonaqueous electrolytic solution was prepared.

<Fabrication of an evaluation battery>

Next, the fabricated working electrode (negative electrode) was used to fabricate a coin-type secondary battery for evaluation shown in FIG. 2 (also referred to as simply an "evaluation battery"). FIG. 2 is a cross-sectional view showing a coin-type secondary battery for evaluation.
First, lithium metal foil was pressed against a nickel net, and the workpiece was punched into a circular shape having a diameter of 15.5 mm; thereby, a disk-shaped counter electrode 4 made of lithium foil and stuck to a current collector 7a made of a nickel net was fabricated.
Next, a separator 5 impregnated with the electrolyte solution was placed between the working electrode (negative electrode) 2 stuck to a current collector 7b and the counter electrode 4 stuck to the current collector 7a, and stacking was performed. After that, the working electrode 2 was housed in an exterior cup 1, the counter electrode 4 was housed in an exterior can 3, the exterior cup 1 and the exterior can 3 were combined, peripheral portions of the exterior cup 1 and the exterior can 3 were crimped via an insulating gasket 6, and sealing was performed; thereby, an evaluation battery was fabricated.

In the fabricated evaluation battery, peripheral portions of the exterior cup 1 and the exterior can 3 are crimped via the insulating gasket 6, and thus a sealed structure is formed. In the interior of the sealed structure, as shown in FIG. 2, the current collector 7a, the counter electrode 4, the separator 5, the working electrode (negative electrode) 2, and the current collector 7b are stacked in this order from the inner surface of the exterior can 3 toward the inner surface of the exterior cup 1.

<Charge/discharge test>

The fabricated evaluation battery was subjected to the following charge/discharge test at 25°C. In this test, the process of doping lithium ions into the carbon powder was referred to as "charge", and the process of dedoping lithium ions from the carbon powder was referred to as "discharge".

First, constant current charge was performed at a current value of 0.39 mA until the circuit voltage reached 0 mV, switching to constant voltage charge was performed at the time point when the circuit voltage reached 0 mV, and charge was continued until the current value reached 20 μA. The charge capacity (unit: mAh/g) of the first time was determined from the amount of current passed during this time. After that, the test was suspended for 120 minutes. Next, constant current discharge was performed at a current value of 0.39 mA until the circuit voltage reached 1.5 V, switching to constant voltage discharge was performed at the time point when the circuit voltage reached 1.5 V, and discharge was continued until the current value reached 20 μA. The discharge capacity (unit: mAh/g) of the first time was determined from the amount of current passed during this time. The results are shown in Tables 1 and 2. In practice, the discharge capacity is preferably 540 mAh/g or more.

From the results of the above charge/discharge test, the initial efficiency (unit: %) was determined based on the following formula. The results are shown in Tables 1 and 2. In practice, the initial efficiency is preferably 78% or more.

Initial efficiency = (discharge capacity of the first time/charge capacity of the first time) × 100

For Example 4 and Comparative Example 2, the absolute value of the amount of change in voltage between before and after holding for 10 minutes without passing a current after the end of discharge was evaluated as an IR drop (unit: V). The above value was 0.14 V in Example 4, and was 0.18 V in Comparative Example 2. When the IR drop is smaller, the internal resistance of the battery is smaller and a higher average voltage as a battery can be obtained, and a stabler conductive path can be obtained and thus cycle characteristics are more excellent.

[Table 1]

Table 1

| | | Firing temperature | | Carbon coating conditions | | | | | | | Carbon-coated non-graphitizable carbon | | | | | | | | | | Charge/discharge test | |
| | | | | | | | | | | | | | Thickness of carbon coating layer | | | | Carbon coating layer | | Non-graphitizable carbon | | |
| | | | Method | Source material | Pressure | Temperature | Preheating | Number of times of treatment | Holding time | Average particle size | Specific surface area | Average thickness | Minimum value | Maximum value | Minimum value/maximum value | Ix/Iy | d0-02 | Isp2/(Isp2 + Isp3) | Presence or absence of peak corresponding to 002 plane | Discharge capacity | Initial efficiency |
| | | °C | | Kind | kPa | °C | °C | Times | Seconds | μm | m²/g | nm | nm | nm | % | - | nm | - | | mAh/g | % |
| Example | 1 | 750 | CVI | Toluene | 10 | 750 | 200 | 30 | 15 | 29.2 | 0.36 | 10.1 | 9.0 | 10.8 | 83.5 | 0.-63 | 0.4-3 | 0.1-05 | Absent | 610 | 79 |
| Example | 2 | 850 | CVI | Toluene | 10 | 850 | 200 | 30 | 15 | 24.7 | 0.36 | 7.2 | 6.7 | 7.4 | 91.1 | 0.-51 | 0.4-1 | 0.1-08 | Absent | 559 | 81 |
| Example | 3 | 700 | CVI | Cyclohexane | 10 | 700 | 200 | 30 | 15 | 31.4 | 0.26 | 5.1 | 4.6 | 5.4 | 85.0 | 0.-90 | 0.4-1 | 0.0-96 | Absent | 710 | 80 |
| Comparative Example | 1 | 1100 | - | - | - | - | - | - | - | 3.20 | 4.3 | - | - | - | - | - | - | - | Present | 385 | 81 |
| Comparative Example | 2 | 850 | - | - | - | - | - | - | - | 27.2 | 0.92 | - | - | - | - | - | - | - | Absent | 530 | 78.4 |
| Comparative Example | 3 | 700 | CVI | Toluene | 10 | 700 | 200 | 30 | 15 | 30.0 | 0.40 | 2.0 | 1.7 | 2.6 | 63.8 | 1.-02 | 0.4-1 | 0.0-96 | Absent | 689 | 75 |

EP 4 549 382 A1

16

[Table 2]

[Table 2]

Table 2

| | | Firing temperature | Carbon coating conditions | | | | | Carbon-coated non-graphitizable carbon | | | | | | | | | Non-graphitizable carbon | Charge/discharge test | |
| | | | Meth-od | Source material | Tempera-ture | Bubbling tempera-ture | Hold-ing time | Aver-age particle size | Speci-fic surface area | Thickness of carbon coating layer | | | | Carbon coating layer | | | Presence or absence of peak correspond-ing to 002 plane | Dis-charge capacity | Initial efficien-cy |
| | | | | | | | | | | Average thick-ness | Mini-mum value | Maxi-mum value | Minimum value /maxi-mum value | Ixlly | d002 | Isp2/ (Isp2 + Isp3) | | | |
| | | °C | | Kind | °C | °C | Hours | μm | m$^2$/g | nm | nm | nm | % | - | nm | - | | mAh/g | % |
| Example | 4 | 700 | CVD | Cyclohexane | 700 | 5 | 1 | 29.9 | 0.13 | 5.5 | 5.1 | 6.9 | 73.9 | 0.85 | 0.41 | 0.10-2 | Absent | 745 | 80 |
| Compara-tive Exam-ple | 4 | 850 | CVD | Toluene | 850 | 50 | 1 | 4.0 | 3.62 | 80.2 | 28.6 | 99.3 | 28.8 | 0.33 | 0.44 | 0.09-7 | Absent | 483 | 77 |
| Compara-tive Exam-ple | 5 | 700 | CVD | Benzene | 800 | 15 | 1 | 28.2 | 0.45 | 25.0 | 20.2 | 32.4 | 62.3 | 0.95 | 0.41 | 0.08-7 | Absent | 556 | 76 |
| Compara-tive Exam-ple | 6 | 700 | CVD | Benzene | 1000 | 15 | 1 | 29.6 | 0.22 | 50.0 | 40.3 | 61.2 | 65.8 | 0.71 | 0.42 | 0.09-6 | Present | 421 | 79 |

18

EP 4 549 382 A1

As can be seen from Tables 1 and 2, Examples 1 to 4, in which the average thickness of the carbon coating layer is 4 nm or more and 30 nm or less and the minimum value/maximum value of the thickness of the carbon coating layer is 70% or more, exhibited high discharge capacity and high initial efficiency.

On the other hand, in Comparative Examples 1 and 2, in which a carbon coating layer is not provided, and Comparative Examples 3 to 6, in which although a carbon coating layer is provided, the minimum value/maximum value of the thickness of the carbon coating layer is less than 70% and the average thickness of the carbon coating layer is more than 30 nm or less than 4 nm, at least one of the discharge capacity and the initial efficiency was insufficient.

[REFERENCE SIGNS LIST]

1  exterior cup
2  working electrode
3  exterior can
4  counter electrode
5  separator
6  insulating gasket
7a  current collector
7b  current collector

**Claims**

1. Carbon-coated non-graphitizable carbon comprising:

   non-graphitizable carbon; and a carbon coating layer provided on a surface of the non-graphitizable carbon,
   wherein an average thickness of the carbon coating layer is 4 nm or more and 30 nm or less, and
   a minimum value of a thickness of the carbon coating layer is 70% or more of a maximum value of the carbon coating layer.

2. The carbon-coated non-graphitizable carbon according to claim 1,

   wherein in diffraction intensity of the carbon coating layer determined by a selected area electron diffraction method,
   a peak intensity Ix corresponding to a 002 plane of graphite in a tangential direction of the carbon coating layer and a peak intensity Iy corresponding to a 002 plane of graphite in a normal direction of the carbon coating layer satisfy Formula (1) below:

   $$Ix/Iy < 1.00 \quad (1).$$

3. The carbon-coated non-graphitizable carbon according to claim 1,

   wherein in a diffraction spectrum of the carbon coating layer measured by a selected area electron diffraction method,
   an interlayer distance d002 of a 002 plane determined from a peak corresponding to a 002 plane of graphite in a normal direction of the carbon coating layer is 0.38 nm or more.

4. The carbon-coated non-graphitizable carbon according to claim 1, wherein Isp2/(Isp2 + Isp3) of the carbon coating layer measured by electron energy loss spectroscopy is 0.090 or more, where Isp2 is an intensity of a peak derived from sp2 and Isp3 is an intensity of a peak derived from sp3.

5. Carbon-coated non-graphitizable carbon comprising:

   non-graphitizable carbon; and a carbon coating layer provided on a surface of the non-graphitizable carbon,
   wherein an average thickness of the carbon coating layer is 4 nm or more and 30 nm or less,
   a minimum value of a thickness of the carbon coating layer is 70% or more of a maximum value of the carbon coating layer,

in diffraction intensity of the carbon coating layer determined by a selected area electron diffraction method, a peak intensity Ix corresponding to a 002 plane of graphite in a tangential direction of the carbon coating layer and a peak intensity Iy corresponding to a 002 plane of graphite in a normal direction of the carbon coating layer satisfy Formula (1) below:

$$Ix/Iy < 1.00 \ (1),$$

in a diffraction spectrum of the carbon coating layer measured by a selected area electron diffraction method, an interlayer distance d002 of a 002 plane determined from a peak corresponding to a 002 plane of graphite in a normal direction of the carbon coating layer is 0.38 nm or more, and

Isp2/(Isp2 + Isp3) of the carbon coating layer measured by electron energy loss spectroscopy is 0.090 or more, where Isp2 is an intensity of a peak derived from sp2 and Isp3 is an intensity of a peak derived from sp3.

6. The carbon-coated non-graphitizable carbon according to claim 1,

wherein in a diffraction spectrum of the non-graphitizable carbon measured by a selected area electron diffraction method,

there is no peak corresponding to a 002 plane of a graphite structure.

7. Carbon-coated non-graphitizable carbon comprising:

non-graphitizable carbon; and a carbon coating layer provided on a surface of the non-graphitizable carbon, wherein an average thickness of the carbon coating layer is 4 nm or more and 30 nm or less,

a minimum value of a thickness of the carbon coating layer is 70% or more of a maximum value of the carbon coating layer,

in diffraction intensity of the carbon coating layer determined by a selected area electron diffraction method, a peak intensity Ix corresponding to a 002 plane of graphite in a tangential direction of the carbon coating layer and a peak intensity Iy corresponding to a 002 plane of graphite in a normal direction of the carbon coating layer satisfy Formula (1) below:

$$Ix/Iy < 1.00 \ (1),$$

in a diffraction spectrum of the carbon coating layer measured by a selected area electron diffraction method, an interlayer distance d002 of a 002 plane determined from a peak corresponding to a 002 plane of graphite in a normal direction of the carbon coating layer is 0.38 nm or more,

Isp2/(Isp2 + Isp3) of the carbon coating layer measured by electron energy loss spectroscopy is 0.090 or more, where Isp2 is an intensity of a peak derived from sp2 and Isp3 is an intensity of a peak derived from sp3, and in a diffraction spectrum of the non-graphitizable carbon measured by a selected area electron diffraction method, no peak corresponding to a 002 plane of a graphite structure is observed.

8. A negative electrode for a lithium-ion secondary battery, the negative electrode comprising the carbon-coated non-graphitizable carbon according to any one of claims 1 to 7.

9. A lithium-ion secondary battery comprising the negative electrode for a lithium-ion secondary battery according to claim 8.

# FIG. 1

# FIG. 2

**EP 4 549 382 A1**

# INTERNATIONAL SEARCH REPORT

International application No.

**PCT/JP2023/023595**

## A. CLASSIFICATION OF SUBJECT MATTER

*C01B 32/00*(2017.01)i; *H01M 4/36*(2006.01)i; *H01M 4/587*(2010.01)i
FI:   C01B32/00; H01M4/587; H01M4/36 C

According to International Patent Classification (IPC) or to both national classification and IPC

## B. FIELDS SEARCHED

Minimum documentation searched (classification system followed by classification symbols)

C01B32/00; H01M4/36; H01M4/587

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | JP 10-233206 A (ASAHI CHEM IND CO LTD) 02 September 1998 (1998-09-02) | 1-9 |
| A | CN 113184827 A (KUNSHAN BAOCHUANG NEW ENERGY TECHNOLOGY CO., LTD.) 30 July 2021 (2021-07-30) | 1-9 |
| A | JP 2009-187939 A (JFE CHEMICAL CORP) 20 August 2009 (2009-08-20) | 1-9 |

☐ Further documents are listed in the continuation of Box C.  ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **16 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/023595**

| Patent document<br>cited in search report | | | Publication date<br>(day/month/year) | Patent family member(s) | | | Publication date<br>(day/month/year) |
|---|---|---|---|---|---|---|---|
| JP | 10-233206 | A | 02 September 1998 | (Family: none) | | | |
| CN | 113184827 | A | 30 July 2021 | (Family: none) | | | |
| JP | 2009-187939 | A | 20 August 2009 | JP | 2013-258156 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10233206 A